(19) Europäisches Patentamt / European Patent Office / Office européen des brevets

(11) **EP 3 045 932 B1**

(12) **EUROPEAN PATENT SPECIFICATION**

(45) Date of publication and mention
of the grant of the patent:
**23.12.2020 Bulletin 2020/52**

(51) Int Cl.:
**G01S 5/16** (2006.01)      **G01S 3/783** (2006.01)

(21) Application number: **16151381.7**

(22) Date of filing: **14.01.2016**

(54) **POSITIONING SYSTEM AND METHOD**

POSITIONIERUNGSSYSTEM UND VERFAHREN

SYSTÈME ET PROCÉDÉ DE POSITIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.01.2015 US 201514597434**

(43) Date of publication of application:
**20.07.2016 Bulletin 2016/29**

(73) Proprietor: **CSEM Centre Suisse d'Electronique et de
Microtechnique SA - Recherche et Développement
2002 Neuchâtel (CH)**

(72) Inventor: **Hasler, David
2000 Neuchâtel (CH)**

(74) Representative: **P&TS SA (AG, Ltd.)
Avenue J.-J. Rousseau 4
P.O. Box 2848
2001 Neuchâtel (CH)**

(56) References cited:
**US-A1- 2002 093 666      US-A1- 2004 188 616
US-A1- 2013 120 763**

**Description**

Field of the invention

The present invention concerns a system and method for positioning a target comprising N light sources with respect to a shadow sensor. In particular, the present invention concerns a system and method for six degrees of freedom (6D) positioning this target with respect to a shadow sensor.

Description of related art

In traditional three to six dimensional positioning systems (x, y, Z, pitch, roll, and yaw), a camera records the position of a set of points in the scene. These points can appear in the form of a predefined shape, e.g. a cross or a small ball whose center is computed using conventional image processing techniques. In general a target, i.e. a body, in particular a rigid body comprises these points. Other known systems use point light sources instead of objects with a predefined shape, which makes the detection easier.

The camera of those known positioning systems is a large camera or a stereo-camera system. In this context, a camera is "large" if its smallest dimension is few cm long, e.g. 5 cm long, and its largest dimension is higher than 15 cm, e.g. 1 m or more.

The interesting information is the motion of the target comprising the set of the above-mentioned points, in particular the position of the target with respect to a "world" or reference coordinate system. The camera is in general fixed. In this context, a camera is "fixed" if its pose is known in the reference coordinate system, i.e. it has a known 6D position in the reference coordinate system. This does not necessarily mean that the camera does not move, it could be displaced, as long as this displacement is accounted for by computing the reference coordinate system of the target.

The document US 6,417,836 (Lucent Technologies) discloses a method to track an object in 6D using a camera and a set of five LEDs disposed on a planar surface. Five LEDs are necessary because the LEDs are taken in a single shot by the camera and the identity of each LED is determined thanks to the geometrical configuration of the five LEDs, which allows to compute a value which is invariant to projective transformations. This value is a function of a set of points associated with the planar surface, each corresponding to one of the light sources, with a given one of the points selected as a principal point.

The document WO 2012/007561 filed by the applicant discloses a system that computes the azimuth and elevation of a light source with respect to a sensor with very high precision. It also discloses the method to compute the 3D position of the light sources using several of these sensors.

The document US 8,368,647 discloses various methods for multiplexing the signal from different point light sources in time, to be recorded by a CCD camera.

The document US 2013/0106833 (FUN) describes the use of conventional imaging to track an object in 6D. It discloses a tracking system that makes use of a single camera and complex markers. The markers are designed so as to get a good tracking accuracy on an image. A similar system is disclosed in documents US 7,768,498, US 6,978,167 and US 7,876,942.

US2004188616 discloses a sensor for determining a component of a location of a radiation source within a three dimensional volume including a mask having a series of openings that has a predetermined mathematical relationship among the openings within the series of openings and defines a mask reference line; a detector surface spaced from the mask where radiation passing through the mask creates a mask image on the detector surface having a series of peaks and an image reference line within the mask image that can be located and where at least 50% of the mask image is projected onto the detection surface; and a calculating unit to determine a location of the image reference line within the mask image and the component of the location of the radiation source from the calculated location of the image reference line within the mask image.

An aim of the present invention is to propose a positioning system and method alternative to known solutions.

Another aim of the present invention is to propose a positioning system and method obviating or mitigating one or more disadvantages of known solutions.

Another aim of the present invention is to propose a positioning system allowing the positioning of a target comprising light sources with respect to a sensor.

Another aim of the present invention is to propose a positioning system devoid of cameras.

Another aim of the present invention is to propose a positioning system more compact than known solutions.

Another aim of the present invention is to propose a positioning system and method more precise than known solutions.

Another aim of the present invention is to propose a positioning system and method which can be efficiently used in a surgical and/or in a clinical environment, e.g. for minimally invasive microsurgery.

Brief summary of the invention

According to the invention, these aims are achieved by means of a six degrees of freedom (6D) positioning system comprising:

- a target comprising N light sources;
- at least one shadow sensor comprising a mask and configured to sense shadows cast on the shadow sensor by light emitted from the light sources of the target, wherein N is equal to at least four for at least one shadow sensor and N is equal to at least three for at least two shadow sensors with known relative positions; and
- a processor;
  wherein the processor is configured to:

  - recording a projection of at least four points, a projection of a point being a projection of light from a light source of the target on the shadow sensor;
  - computing a first estimate of the six degrees of freedom position of the target with respect to the shadow sensor using known prior six degrees of freedom positions or a computation method and provided that the relative position of the light sources are known;
  - virtually reprojecting from said first estimate of the six degrees of freedom position the at least four points on the shadow sensor by considering the shadow sensor as a calibrated pinhole camera so as to use projective geometry computations;
  - computing an error between the recorded projections and the virtual reprojections;
  - estimating the six degrees of freedom position of the target with respect to the shadow sensor based on said error and on said first estimate of the six degrees of freedom position of the target.

In the context of the present invention, the noun "target" indicates a body, preferably a rigid body, which means that the relative positions of the light sources of the target are fixed.
In one preferred embodiment, the light source according to the invention is a punctual light source, i.e. it can be approximated as a mathematical point. The light source according to the invention comprises in general integrated optical components. A non-limitative example of a light source according to the invention is a LED.
The light sources can be fixed to the target by movable and/or fixed attaching means. In one embodiment, the target comprises N (blind or through) holes, each hole being arranged to receive a light source.
In this context, N is an integer number. In a preferred embodiment, N is equal or higher than three.
The sensors of the system according to the invention are advantageously shadow sensors. According to one preferred embodiment, the shadow sensors are the sensors as described in WO 2012/007561.
The processor of the system according to the invention can be integrated in a shadow sensor and/or can be an external and distinct processor.
Advantageously, the processor according to the invention is configured to perform the following steps:

- Record a projection of at least four points, a projection of a point being a projection of light from a light source of the target on the shadow sensor.
  In the context of the present invention, a point corresponds to the location of the light source in space, in particular with respect to the shadow sensor.

- Compute a first estimate of the 6D position of the target with respect to the shadow sensor, using known prior 6D positions or a computation method.
  The computation method is used for retrieving a first estimate of the 6D position of the target. In one embodiment, it is a linear computation method.

- Virtually re-project from this first estimate of the 6D position the at least four points on the shadow sensor by considering the shadow sensor as a pinhole camera so as to use projective geometry computations. In the literature, a pinhole camera indicates a camera made of a box with a single small aperture (the pinhole) wherein light from a scene passes through this aperture and projects an image on the opposite side of the box. In this context, however, the expression "pinhole camera" is slightly more generic: it indicates a camera whose projection properties can be modelled as a linear system in projective space. In other words, the output of the camera needs not to be inverted with respect to the scene. Moreover, the camera needs not to have an isotropic coordinate system to express a 2D position to be called a "pinhole camera". In the literature, these cameras are either called "pinhole cameras" or "projective cameras". Therefore, in the present context the expressions "pinhole cameras" and "projective cameras" are synonyms. In other words, in this context, the expression "pinhole camera" indicates also a "projective camera", as the output of the camera needs not to be inverted with respect to the scene. The applicant discovered that surprisingly, from a geometry computation point of view, the shadow sensor can be considered as a pinhole camera, although the shadow sensor according to the invention does not allow to record the image of the scene as a camera. Moreover, if the light sources have all the same emission spectrum, the shadow sensor according to the invention works with a single light source at time.

In this context, the expression "virtually reproject" indicates that the points are not physically reprojected on the sensor, but that the processor is configured to perform some calculations that correspond to the "virtual" reprojections of the points on the sensor.

- Compute an error between the recorded projections and the virtual reprojections.

- Estimating the six degrees of freedom (6D) position of the target with respect to the shadow sensor based on this error, which is used to correct the first and/or past 6D estimate(s) of the position of the target.

The system according to the invention is compact, has a low cost, no lens and does not need an external camera. It is precise and accurate, and allows a contactless estimate of the position of the target. In one preferred embodiment, it is used as precise and accurate tracking tool for minimally invasive microsurgery, such as cochlear implant.

In one embodiment, N is equal to at least four and the system comprises one shadow sensor.

In another embodiment, N is equal to three and the system comprises two shadow sensors with known relative position. In one preferred embodiment, these two shadow sensors constitute an assembly, i.e. a single device. In another embodiment, these two shadow sensors are distinct sensors, separated by a known distance.

In one embodiment, the shadow sensor comprises a mask and an imager, the mask having repetitive elements and a distinctive element, and wherein as light from the N light sources of the target passes through the mask, a shadow of the mask is cast on the imager. Preferably, the mask and the imager are parallel to each other.

In one embodiment, the shadow sensor comprises a plurality of filters for filtering light of a plurality of wavelengths, and the processor is configured to distinguish between the sensed light from each of the N light sources based at least in part on the sensed wavelengths of light.

In one embodiment, the processor is configured to distinguish between the sensed light from each of the N light sources based at least in part on temporal modulation of the N light sources of the target.

In one embodiment, the shadow sensor further comprises a photodiode for syncing the shadow sensing with the pulsing of the N light sources of the target and/or for identifying which light source is emitting light.

In one embodiment, the shadow sensor being configured so as to operate as a photodiode, by taking an image and summing captured pixels to generate a single value.

In one embodiment, the system according to the invention comprises a radiofrequency link between each light source and the shadow sensor, so that each light source can send over this radiofrequency link an ID of the light source and sync its light emission with the recording of the shadow by the shadow sensor.

In one embodiment, the processor of the system according to the invention is configured to:

- sync the shadow sensing with a pulsing of the light sources of the target;
- distinguish between the sensed shadows from each of the N light sources of the target;
- determine two dimensional (2D) positions corresponding to each of the light sources of the target based on the sensed shadows; and
- compute a 6D position of the target with respect to the shadow sensor based on the determined two dimensional (2D) positions.

The present invention concerns also a method for estimating a six degrees of freedom (6D) position of a target comprising N light sources with respect to at least one shadow sensor, the method comprising:

- recording a projection of at least four points, a projection of a point being a projection of light from a light source of the target on the shadow sensor;
- computing a first estimate of the 6D position of the target with respect to the shadow sensor using known prior 6D positions or a computation method;
- virtually reprojecting from this first estimate of the 6D position the at least four points on the shadow sensor by considering the shadow sensor as a pinhole camera so as to use projective geometry computations;
- computing an error between the recorded projections and the virtual reprojections, and
- estimating the six degrees of freedom (6D) position of the target with respect to a shadow sensor based on this error; in other words the error is used to correct the first and/or past estimate of the 6D position of the target.

In one embodiment, the steps of computing an estimate, virtually reprojecting the at least four points, and computing an error are performed iteratively. An interactive method needs an initial position estimate but has the advantage to deliver an estimate with better accuracy.

In one embodiment, the method according to the invention comprises the step of checking if the number of iterations exceeds a threshold.

In one embodiment, if N is equal to at least four, the system comprises one shadow sensor, and if N is equal to three, the system comprises two shadow sensors.

According to one example, a six degrees of freedom (6D) positioning system comprises

- a target comprising at least four light sources;
- a shadow sensor configured to sense shadows cast on the sensor by light emitted from the at least four light sources of the target; and
- a processor,

wherein the processor is configured to:

- sync shadow sensing with a pulsing of the at least four light sources of the target;
- distinguish between the sensed shadows from each of the at least four light sources of the target;
- determine two dimensional (2D) positions corresponding to each of the at least four light sources of the target based on the sensed shadows; and
- compute a 6D position of the target with respect to the shadow sensor based on the determined 2D positions.

In various embodiments of the above example, the shadow sensor comprises a mask and an imager, the mask having repetitive elements and a distinctive element, and as light from the at least four light sources of the target passes through the mask, a shadow of the mask is cast on the imager; the distinctive element is embodied as a 2D code or as a set of missing repetitive elements; the repetitive element of the mask comprises regular intervals between the repetitive elements; the shadow sensor comprises a plurality of filters for filtering light of a plurality of wavelengths, and the processor is configured to distinguish between the sensed light from each of the at least four light sources based at least in part on the sensed wavelengths of light; the processor is configured to distinguish between the sensed light from each of the at least four light sources based at least in part on temporal modulation of the at least four light sources of the target; the shadow sensor comprises a filter for filtering wavelengths of ambient light; the at least four light sources of the target are light emitting diodes (LEDs); the shadow sensor further comprises a photodiode for syncing shadow sensing with the pulsing of the at least four light sources of the target or for identifying which light source is emitting light; and/or the 6D position of the target with respect to the shadow sensor is computed based on a pinhole model of light projection.

According to another example, a six degrees of freedom (6D) positioning system comprises:

- a target comprising at least three light sources;
- at least two shadow sensors configured to sense shadows cast on the at least two shadow sensor sensors by light emitted from the at least three light sources of the target; and
- a processor,

wherein the processor is configured to:

- sync shadow sensing of the at least two shadow sensors with a pulsing of the at least three light sources of the target;
- distinguish between the sensed shadows from each of the at least three light sources of the target, for each of the at least two shadow sensors;
- determine two dimensional (2D) positions corresponding to each of the at least three light sources of the target based on the sensed shadows, for each of the at least two shadow sensors; and
- compute a 6D position of the target with respect to the at least two shadow sensors based on the determined 2D positions.

In various embodiments of the above example, the shadow sensor comprises a mask and an imager, the mask having repetitive elements, a distinctive element, or a 2D code, and as light from the at least three light sources of the target passes through the mask, a shadow of the mask is cast on the imager; the mask has a repetitive element and there is a regular interval between the repetitive elements of the mask; the mask has a 2D code contained on the mask or a set of missing repetitive elements; the shadow sensor comprises a plurality of filters for filtering light of a plurality of wavelengths, and the processor is configured to distinguish between the sensed light from each of the at least three light sources based at least in part on the sensed wavelengths of light; the processor is configured to distinguish between the sensed light from each of the at least three light sources based at least in part on temporal modulation of the at least three light sources of the target; the shadow sensor comprises a filter for filtering wavelengths of ambient light; the at least three light sources of the target are light emitting diodes (LEDs); the shadow sensor further comprises a photodiode for syncing shadow sensing of the at least two shadow sensors with the pulsing of the at least three light sources of the target or for identifying which light source is emitting light; and/or the 6D position of the target with respect to the at least two shadow sensors is computed based on a pinhole model of light projection.

According to yet another example, a method for determining a six degrees of freedom (6D) position comprises:

- recording a projection of at least four points, a projection of a point being a projection of light from a light source on a sensor, wherein the light source and the sensor are part of a positioning system;
- computing a first estimate of the 6D position using known prior positions or a linear method;
- virtually reprojecting the at least four points on the sensor using a pinhole model or a projective model of light projection; and
- computing an error between the recorded projections and the virtual reprojections.

In various embodiments of the above example, the method the steps of computing an estimate, virtually reprojecting the at least four points, and computing an error are performed iteratively; the positioning system comprises two sensors and three light sources, the light sources being light emitting diodes (LEDs); the positioning system comprises one sensor and four light sources, the light sources being light emitting diodes (LEDs); the sensor is a shadow sensor comprising a mask and an imager, the mask having repetitive elements, a distinctive element, or a 2D code, and wherein as light from the light source passes through the mask, a shadow of the mask is cast on the imager; and/or the shadow sensor further comprises a photodiode for syncing the recording of the projection of the at least four points with an emission of light from the light source or for identifying which light source is emitting light.

According to yet another example, a six degrees of freedom (6D) positioning system comprises:

- a target comprising three light sources;
- a shadow sensor configured to sense shadows cast on the sensor by light emitted from the three light sources of the target; and
- a processor,

wherein the processor is configured to:

- sync shadow sensing with a pulsing of the three light sources of the target;
- distinguish between the sensed shadows from each of the three light sources of the target;
- determine two dimensional (2D) positions corresponding to each of the three light sources of the target based on the sensed shadows;
- determine a Z value for each of the three light sources, the Z value corresponding to a distance from said light source for which the Z value is determined to the shadow sensor as measured along the optical axis of said shadow sensor; and
- compute a 6D position of the target with respect to the shadow sensor based on the determined 2D positions and on the determined Z values.

In various embodiments of the above example, the processor is further configured to:

- compute four 6D positions of the target with respect to the shadow sensor based on the determined 2D positions; and
- select a 6D position among said four 6D positions, the selected 6D position having the most correspondence to said determined Z values.

Brief Description of the Drawings

The invention will be better understood with the aid of the description of an embodiment given by way of example and illustrated by the figures, in which:

Fig. 1 shows a section view of a light source and of a shadow sensor of the system according to one embodiment of the invention.

Fig. 2 shows a section view of a light source and of a shadow sensor of the system according to another embodiment of the invention, in which the Snell's law is applied.

Fig. 3A shows a section view of a pinhole camera and an object point.

Fig. 3B shows a section view of a shadow sensor and of a light source of the system according to the invention

Fig. 4 shows a flow chart of some steps of the method for computing the 6D position of a target with respect to a shadow sensor according to one embodiment of the invention.

Fig. 5 illustrates a front view of a target comprising four coplanar light sources, and of a shadow sensor as seen from a point on the optical axis.

Fig. 6 illustrates a perspective view of the target and of the shadow sensor of Fig. 5.

Fig. 7 illustrates a top view of a sensor and of a target configuration corresponding to a regular tetrahedron.

Fig. 8 illustrates a top view of a sensor and of a target configuration corresponding to a regular tetrahedron, where one of the light sources of the target as seen by the sensor is occluded by another light source.

Fig. 9 illustrates a top view of a sensor and of a target configuration corresponding to a flattened tetrahedron.

Fig. 10 illustrates a perspective view of a target comprising five light sources according to an embodiment of the invention.

Fig. 11 shows a block diagram of a positioning system according to one embodiment of the invention.

Detailed description of possible embodiment(s) of the invention

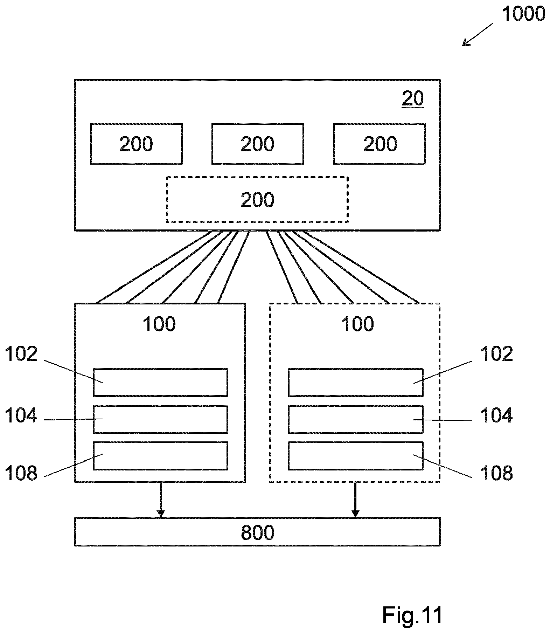

The present disclosure relates to a 6D positioning system 1000, in particular to a compact 6D positioning system. One example of such a system 1000 is illustrated in Fig. 11. Generally, as illustrated in Fig. 11, the positioning system 1000 can be said to include at least one sensor 100, a target 20, and a processor 800.

In one preferred embodiment, the light source 200 according to the invention is a punctual light source, i.e. it can be approximated as a mathematical point. The light source according to the invention comprises in general integrated optical components. In one preferred embodiment, the dimension of the light source without considering those optical components is less than 5 mm, preferably less than 1 mm. A non-limitative example of a light source according to the invention is a LED.

The sensors 100 of the system according to the invention are advantageously shadow sensors. According to one preferred embodiment, the shadow sensors are the sensors as described in WO 2012/007561.

As illustrated in Fig. 11 and described in more detail below, each sensor 100 may comprises a mask 102, an imager 104, and a processor 108.

However, it should be noted that various embodiments of the system 1000 may comprise any combination of processors independent of or dependent of the sensors 100. For example, in some embodiments, the system 1000 may comprise only a single independent processor 800 and/or may comprise only processors 108 in the sensors 100.

As will also be described in more detail below, in one preferred embodiment the target 20 comprises at least three light sources 200, such as light emitting diodes (LEDs): in such a case, the system 1000 comprises at least two shadow sensors 100. In another preferred embodiment, the target 20 comprises at least four light sources 200: in such a case, the system 1000 comprises at least one shadow sensor 100.

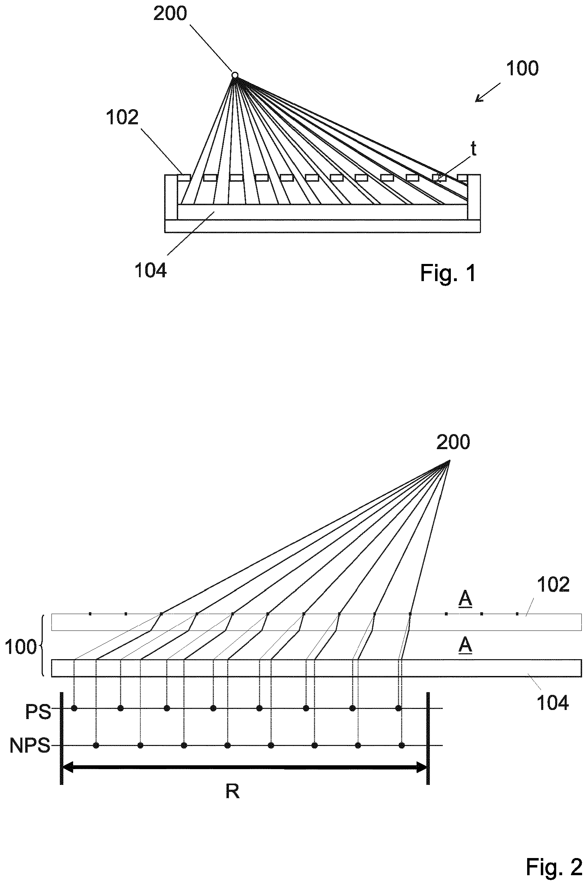

As further illustrated in Fig. 1, the shadow sensor 100 comprises an imager 104 and a mask 102. In one preferred embodiment, the mask 102 is composed of repetitive patterns and of a distinctive element, for example, a form of a grating. In this way, as light from a light source 200 passes through the mask 102, a distinct shadow pattern is cast on the imager 104 behind the mask 102 in accordance with the position of the sensor 100 with respect to the light source 200 and the pattern of the mask 102.

By using a repetitive pattern for the mask 102, the precision of the sensor 100 may be increased by improving the measurement of the sensed pattern. By recording the shadow of the mask 102 cast by each light source 200 on the imager 104, and by properly multiplexing the light sources 200, the system can compute the 6D position of the target 20 comprising the light sources 200 with respect to the shadow sensor(s) 100.

In one embodiment, the repetitive pattern of the mask 102 is a checkerboard engraved on piece of glass. In other embodiments, the mask 102 comprises a set of micro-lenses. In practice, if looked at in a small scale, a regular mask does not generate a strictly regular shadow. This is because the mask 102 has a certain thickness t (as can be seen in Fig. 1), because of refraction effects on the glass of the mask 102 (which will be discussed with reference to Fig. 2), and/or because of other optical phenomena.

As illustrated in Fig. 2, the refraction phenomenon transforms a perfectly regular shadow mask 102 into an irregular shadow, which corresponds to a non-periodic signal NPS (and not to a periodic signal PS, as in the ideal case without refraction). This is due to a layer of glass or any other material in which the mask 102 is made, which is traversed by the light from the light source 200 prior to reading by the imager 104. In the illustrated case, the light from the light source 200 traverses the air A before reaching the mask 102 and between the mask 102 and the imager 104.

By assuming a light position, and applying Snell's law, the shape of the shadow may be computed, as is illustrated in Fig. 2. This shape can be used to compute the shadow position in an iterative process, by starting with an estimate of the position of the light, computing the position and shape of the shadow, slightly changing the position estimate of the light in two opposite directions, and re-computing the shape and position of the shadow for each position estimate of the light. By correlating the real shadow shape with these three computed shadows' shapes, the real shadow position can be interpolated. Once this real shadow position is estimated, it can be discounted for, i.e. the position of the shadow of an ideal projective system can be computed. In this context, an ideal projective system is a projective system in which non-linear effects such as the refraction do not take place. This last position is then used to in the 6D computation that follows.

It is to be understood that any pattern on the mask 102 that can cast a shadow of approximately regular alternations of shadow and light may be used. In other words, in one preferred embodiment the mask 102 comprises repetitive elements, each repetition of the elements contributing to the precision of the measurement. In one preferred embodiment, the mask 102 of the shadow sensor 100 comprises at least three repetitive elements in one direction and at least three repetitive elements in another different direction. If the mask comprises a regular pattern, an efficient and accurate algorithm can be applied.

In one embodiment of the described shadow sensor 100, the imager 104 size is on the order of a few millimeters, a mask 102 to imager 104 distance is on the order of about 0.3 mm to 2 mm, and the distance between two repetitive patterns on the mask 102 is on the order of about 100 $\mu$m. Thus, a full shadow sensor 100 may be about 10 mm $\times$ 10 mm x2 mm, including various processors and other components, but excluding a battery. In other embodiments, the shadow sensor 100 may be about 4 mm $\times$ 4 mm x1 mm. However, it should be noted that these dimensions are not intended to be limiting and even smaller shadow sensors 100 are envisioned to be within the scope of the present disclosure. Moreover, the shadow sensor does not necessarily have a squared section. The main advantage of the shadow sensor 100 in terms of size, compared to a traditional camera is its thickness: the mask-imager assembly being much thinner than a lens-imager assembly of a standard camera.

In one embodiment, the size of the target is of the same order of magnitude of the size of the shadow sensor. Therefore, the system according to the invention is compact and can be easily used for medical or clinical applications, e.g. for minimally invasive microsurgery.

To record the projection of light sources 200, the shadow sensor 100 may sense several different wavelengths, use a temporal multiplexing scheme, or a combination of sensing several wavelengths and a temporal multiplexing scheme. Regarding the sensing of several wavelengths, as described in WO 2012/007561, a shadow sensor 100 can simultaneously record the projection of several light sources by using light sources 200 with distinct spectra, and dividing the sensor 100 into zones with distinct frequency responses.

The zones can be large zones covering several periods of the mask 102, or small zones, for example, using a filter having the size of a single pixel. In the latter case, the filters are placed on the pixels of the imager 102, whereas in the former case, the filter can be placed either near the mask 102, near the imager 104, or anywhere in-between. The filters do not need to be perfectly matched to the light source spectra; rather, it suffices that the influence of each light source for each filtered response can be recovered. In other words, if a squared matrix of responses, where each line represents the response to each light source and each column represents the response for each filter, is invertible, then it is possible to distinguish the influence of each light source. To ensure a good resilience to noise, this matrix has, in some embodiments, a condition number below 100, and in other embodiments, below 10. The signal to noise ratio can be further enhanced by having light sources 200 with sharp spectral emissions, and filters with sharp spectral responses at the same frequency as the light source.

Temporal multiplexing allows handling more light sources 200 with simpler and less expensive hardware, particularly where the target 20 does not move fast (e.g. it has a displacement larger than 10% of the desired (x, y, z) precision of the position of the target).

However, temporal multiplexing may be less capable depending on the motion of the light sources 200 in-between the shadow acquisition. In one preferred embodiment, the target 20 is a rigid body, which means that the relative positions of the light sources 200 of the target 20 are fixed. Thus, a target 20 that moves between each light source shadow acquisition is equivalent to a target 20 where the light source 200 can have a relative and unknown displacement, thereby resulting in a poor 6D position computation.

To solve the motion issues, in one preferred embodiment the acquisition of the shadow is performed as fast as possible. For example, by setting the exposure time to 4 milliseconds, and waiting 2 milliseconds in-between captures, the whole acquisition process will take 22 milliseconds for a target with four light sources (in this scenario, the image of the shadow may be stored in a temporary memory buffer, so as to start the recording of the next light source before having computed the shadow position). In addition, by temporally tracking the position of each light source 200 individually, and knowing when the measurement took place, the position of each light source 200 over time can be interpolated. Thus, using these interpolated values, the 6D position of the target 20 can be computed by taking the position of each light source 200 at a given time.

The position of the light source 200 is interpolated in 3D space when two shadow sensors 100 (or a double shadow sensor 100) are used, or in 2D projection space when a single shadow sensor 100 is used. The simplest interpolation model assumes that the light source travels at constant speed. More elaborate models use a constant acceleration, or a continuous acceleration assumption (without jumps), and can use a Kalman filter to track the speed and acceleration of each light source 200 over time.

In one embodiment, in the temporal multiplexing scheme, the projection corresponding to each light source 200 is known. Thus, in one embodiment, a radiofrequency link can be used to send an ID of the light source 200 and to sync the light emission of the light source 200 with the recording of the shadow by the shadow sensor 100.

To avoid using radio frequency, other embodiments may use an additional photodiode (not illustrated) which is sampled at higher temporal frequency than the recording of the shadow (for example at 10 times higher temporal frequency). If a filter is used in a shadow sensor 100, then the photodiode may be placed behind the filter of the shadow sensor 100, next to the imager 104.

This additional photodiode serves two purposes: it is used to sync the recording of the shadow by the shadow sensor 100 with the light emission from the light source 200 and is used to identify which light source 200 is emitting light. This can be done, for example, by varying the emission delay in-between the light sources 200, such that by measuring the time interval between two or more light emissions, it is possible to determine when each light source 200 is emitting light.

Therefore, it is also possible to determine the projection corresponding to each light source 200. One advantage to using an additional photodiode instead of a radio frequency link is that the additional photodiode is more cost effective. For example, the target 20 can be a very simple device with light sources 200 that are pulsed according to a predetermined temporal scheme, with no feedback from the shadow sensor 100.

Alternatively, a shadow sensor 100 in the temporal multiplexing scheme could be used without the additional photodiode. This embodiment is cheaper as use the shadow sensor 100 itself as a photodiode. In one preferred embodiment, the clocks of the plurality of light sources 200 are sync with the clock of the shadow sensor 100, and then the processor of the shadow sensor is used as described above to compute the 6D position. Then the process is repeated whenever the clocks of the plurality of light sources 200 and the clock of the shadow sensor 100 might be out of sync.

In such embodiment, the shadow sensor 100 effectively operates as a single photodiode, i.e. it is arranged to take an image and sum the captured pixels to generate a single value. The single value is proportional to the value that would have been obtained by using the additional photodiode. Therefore, the same method described above with respect to the photodiode may be used with the single value generated by the shadow sensor 100.

To determine the position of a sensor as described herein with respect to a light source using geometric computations, the shadow sensor is advantageously considered as a pinhole camera. This allows to use projective geometry computations. The applicant discovered that surprisingly, from a geometry computation point of view, the shadow sensor can be considered as a pinhole camera, although the shadow sensor according to the invention does not allow to record the image of the scene as a camera. Moreover, the shadow sensor according to the invention works with a single light source at time.

It should be noted that - from a geometry computation point of view, and depending on how the coordinates of the shadow sensor are computed - each shadow sensor can be considered as a pinhole camera. As discussed, in this context the expression "pinhole camera" indicates also a projective camera. In practice, it means that the shadow sensor can be represented in 3D by a four by four matrix, giving some flexibility to the representation of the position of the shadow computed by the processor.

The applicant discovered that surprisingly, from a geometry computation point of view, the shadow sensor 100 can be considered as a pinhole camera.

It should also be noted that, when talking into account non-linear effects, i.e. effects that deviate from an ideal pinhole camera such as the refraction described later in the text, the non-linear effect is used to estimate the position of the shadow in the best possible way, and then, is discounted for. In other words, once the non-linear effect is estimated, the position of the shadow is corrected to as to correspond to the position obtained by an ideal pinhole camera prior to apply the well-known six dimensional projective geometry computation.

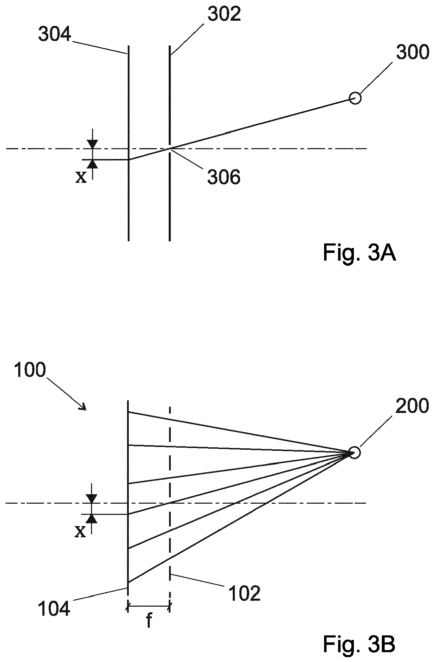

With such a model, a shadow position computation result can be related to the equivalent of the coordinate of the projection of the light source. Fig. 3A shows a section view of a pinhole camera 302 and an object point 300. The light from the scene comprising the object point 300 passes through the pinhole 306.

The position x is computed from the shadow generated on the imager 104 (Fig. 3B) and it is the same as the projection of the object point 300 of the image plane 304 of the pinhole camera of Fig. 3A. In Figs. 3A and 3B, x is a two-dimensional variable, although shown in 1D for clarity purposes. The focal length f of the shadow sensor 100 is the distance between the mask 102 and the image plane 104, as illustrated in Fig. 3B.

Thus, a sensor with known pixel size and configuration, and know sensor-to-mask distance can be considered as a calibrated pinhole camera. Once this equivalence between the shadow sensor 100 and a pinhole camera is understood, projective geometry can be applied to compute the position of the target 20 with respect to the shadow sensor 100 in space. This pinhole model can be applied to light projections at a computed position and compared with the sensed projections. In one preferred embodiment, the shadow sensor is calibrated at some point in time, prior to using it in 6D computations.

In the shadow sensor 100, the z distance from the mask 102 to the light source 200 (measured along the optical axis) could be obtained by computing the scale of the shadow of the mask 102: if the shadow is of the same scale than the mask 102, then the light source 200 is very far away, if it is larger than the light source 200, it is close to the mask 102. By computing the enlargement ratio, it is possible to determine this z distance.

In practice, however, this measurement is not very well conditioned, and thus results in a measurement with poor precision. In substance, the estimation of position x is about 100 times more precise than the estimation of the z distance.

Because of the poor performance in the z estimation, in one preferred embodiment the method performs an estimation of the position of the shadow sensor using only the 2D position (i.e. x) estimation for each light source 200.

According to known geometric rules, the projection of four light sources 200 is used to compute the 6D position of the target 20 with respect to a single shadow sensor 100, provided that the relative position of the light sources are known.

There are efficient linear techniques to compute the 6D position on the basis of the x position, which do not deliver the optimal result in terms of accuracy, and there are non-linear techniques that deliver better accuracy but they are iterative, and need an initial position estimate. The initial position estimate of the iterative methods can be given by a linear technique, by a tracking process over time, or set to an initial arbitrary value.

For example, the computation of the 6D position of a plane in space using four or more correspondences $(\{x_i \leftrightarrow x_i'\},$ as discussed above can be determined according to multiple view geometry principles. This computation can be applied to a scenario where the light sources 200 are all on the same plane. To do so, first the 2D homography matrix between the sensor plane and the light source plane is computed, such that

$$x_i' = H x_i \qquad (1)$$

where $H$ represents a 2D homography matrix.

Then, the first two columns of a rotation matrix and a translation vector can be retrieved according to the relationship:

$$H = K[r_1, r_2, t] \qquad (2)$$

where $K$ are internal parameters, $r_1$ and $r_2$ represent the first two columns of the rotation matrix, respectively and $t$ represents the translation vector.

From this information, the full 6D transformation from the sensor plane to the light source plane (provided that the "world" origin is located on the shadow sensor) can be obtained using the focal length f of the shadow sensor.

The document R. Hartley and A. Zisserman, Multiple view geometry in computer vision, second edition, Cambridge University Press, describes in the algorithm 4.2 the method for computing the 2D homography between the camera plane and the light source plane. Its equation 8.1 allows to retrieve the first two columns of the rotation matrix and the translation vector.

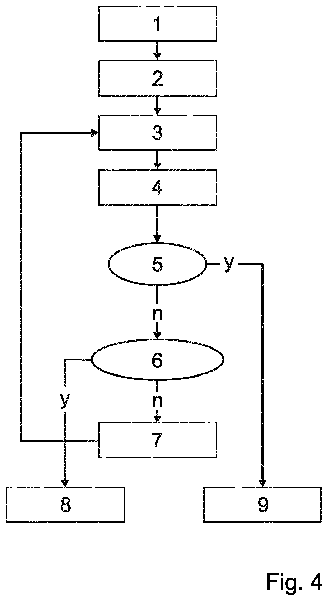

Fig. 4 illustrates a flow chart of the 6D position computation. A computing module, for example a computing module controlled by a processor (e.g. the processor 108 and/or the processor 800 in Fig. 11), starts in step 1 by recording the projection of four or more points. In this context, a "point" indicates the location of a light source in the space.

However it should also be noted that in some conditions, e.g. when there is *a-priori* knowledge on the target position or when the point coordinate (the two-dimensional x) is not the only information retrieved from each light source, it is possible to use fewer than four points to compute the 6D position, as will be discussed.

The number of "points", as the term is used herein can generally be understood as the sum of the number of light sources that the sensors in the system can record. When a single shadow sensor is used, any point generates a measurement consisting of two coordinates. When an assembly of two sensors is used, any point generates a measurement consisting of four coordinates. For example, a system with four light sources and one sensor has four points, which represent eight coordinates; a system with three light sources and two sensors has three points, which represent twelve coordinates. In other words, the projection of a light source on a sensor system can be understood to be a "point".

Then, in step 2, the system computes a first estimate of the 6D position of the target with respect to the shadow sensor, either using past information (tracking) or using any suitable computation method, for example the linear method described above.

In the step 3, from the 6D estimate, the system virtually reprojects the points on the sensor 100, using the pinhole model. In this context, the expression "virtually reprojects" indicates that the points are nor physically reprojected on the sensor, but that the processor is configured to perform some calculations that correspond to the reprojections of the points on the sensor.

In step 4, an error value is computed by comparing the reprojected 2D position of every light source 200 with the 2D position computed using the shadow. In some embodiments, the error value may be computed using an error metric such as a weighted L1 norm, but any suitable error metric could be used. Since the problem is over-constrained, the error is not null.

Thus, in step 5, an iterative error minimization can be performed in order to improve the 6D position estimate. To compute the L1 weighted error norm, the weight can be set using the contrast of the shadow. In other words, the more contrasted the shadow, the more "visible" the light source 100, the more confidence in the measurement and the higher the weight.

If the error is small enough, then the system computes the 6D position estimate of the target 20 with respect to the shadow sensor(s) 100 (step 9). For example, a small enough error may correspond to an error generated when the reprojected points are less than a quarter pixel away from the measured points on average. As an alternative, the "small enough" error can be characterised for a given application, with a given sensor type and dimension, and a given target type and dimension, in a calibration phase by measuring the standard deviation of the measured reprojection error on a set of measurement whose 6D position estimation is known to be correct; the small enough error threshold can be set to, for example, three times said standard deviation.

If the error is not small enough, then in step 6 the system check if the number of iterations exceeds a threshold: if so, then the system declares that no position is available (step 8). If number of iterations does not exceed this threshold, then the system corrects in step 7 the 6D position estimate. The value of this threshold depends principally on the mathematical method used in the computation. In one preferred embodiment, the value of this threshold is about 20.

In the iterative process of Fig. 4, the estimate of the shadow position from the shadow signal can be updated as well so as to better correspond to the pinhole model. For example, by having an estimate of a light source's 3D location, the assumed shape of the shadow can be computed by accounting for scaling and/or refraction. A shifted version of this assumed shape can be used to estimate the shadow position.

Using the above described shadow sensor 100 for computing 6D positions results in more precise measurements than the identification of a target point/object in a scene by a conventional camera. For example, the position of the target can be computed with a precision of the order of 1 nm or less, whereas the location of a target seen by a high resolution camera is roughly on the order of 100 $\mu$m. Further, once the light source configuration is setup, there can be an arbitrary number of shadow sensors in the scene.

The shadow computation works in principle as described in equation 2 of WO 2012/007561, reproduced herein:

$$\begin{cases} A = \sum_x \sin\left[\frac{2\pi}{\Delta P} M \cdot x\right] \cdot s(x) \\ B = \sum_x \cos\left[\frac{2\pi}{\Delta P} M \cdot x\right] \cdot s(x) \\ dX = -\operatorname{atan2}(A, B) \cdot \Delta P \end{cases} \qquad 3)$$

where M is the pixel pitch, $s(x)$ is the shadow pattern, $x$ is the pixel coordinate, and atan2(A,B) is the arctan(A/B) function defined in $[-\pi, \pi]$. In sum, the above equation uses the shadow image to take the sum over the lines and the sum over the columns, resulting in two signals. One signal is used to estimate the $x$ coordinate (in this case, a mono-dimensional coordinate), the other to estimate the $y$ coordinate.

To take advantage of the repetition of the pattern present in the mask 102, it is assumed that the shadow has a given shape, the measured shape is correlated with shifted versions of the assumed shape. The dot product could also be used instead of a correlation. However, it should be noted that it is preferred to use the same metric throughout the computation.

In WO 2012/007561, the assumed shape is a sinusoid and two versions of the assumed shadow shape shifted by half the shape period are used. The ratio of the two dot products is taken, which follows an arctan law, to retrieve the position.

More generally, when starting with a position estimate, a three shifted version of the assumed shape of the shadow can be used, making sure that among the versions, the first is shifted too far in one direction and the last is shifted too far in the opposed direction. Then, a correlation (or dot product, or any similarity metric) value for each can be calculated and a parabola can be fit to the three values. The position of the parabola extremum gives the position estimate of the shadow. In other words, it can be assumed that the similarity metric can be well approximated by a quadratic rule with the shift.

When using a more complex optical model, for example by taking into account the refraction phenomenon, the shifting of the shadow assumed shape is computed by virtually shifting the light sources 200 and computing the resulting shadow according to the refraction model.

To measure the actual shape of the mask 102, a shadow recording can be taken by exposing the shadow sensor 100 to a collimated light source, where the rays of the collimated light source are parallel to the optical axis of the sensor 100. This shape can then be used to compute the shape of the shadow by assuming a 3D position of the light source 200 in the context of an iterative position computation process.

While the above described procedure gives the position up to an undetermined multiple of the signal period, the absolute shadow location can be computed by using a distinctive element, as described in WO 2012/007561. For example, the distinctive element can be a 2D code interlaced with the repetitive patterns. It can also be a set of missing repetitive elements, for example defining a crosshair in the middle of the mask. The missing element creates a sort of "hole" in the repetitive pattern, the hole being not a physical hole, it represents rather the absence of a repetitive element. It must be understood that the missing repetitive elements are not necessarily repetitive. The missing elements can also be set on the border, thus having a pattern of repetitive elements that do not cover completely the imager of the sensor. The preferred solution uses a set of missing (repetitive) elements.

As mentioned above, the target 20 comprises at least three light source 200, but may comprise additional light sources in various arrangements. For example, in one embodiment, the 6D position of a target 20 can be computed using only three light source projections. These three projection locations lead to the resolution of a quadratic system of equations that has four solutions. The derivation of the solutions to such a system are described, for example, in "Review and Analysis of Solutions of the Three Point Perspective Pose Estimation Problem" by Haralick et al., International Journal of Computer Vision 13, no. 3 (1994), p. 331-56.

Such an embodiment may be possible when a good initial estimate of the position of the target with respect to the sensor is known, for example, when the shadow sensor 100 is tracked over time and one of the light source 200 is temporarily out of sight. In another example, such an embodiment may be possible when using the Z estimate for each light source 200, and selecting the 6D position out of the four solution candidates which leads to a Z position of each light source that is the closest to the corresponding Z estimate. The closest, as used herein, refers to when the sum of the differences between the Z positions and the Z estimates using any suitable metric is minimum. In this scenario, by knowing the precision of the Z estimations, it can be determined whether the 6D position is correct or if two solutions may be confused.

Yet another example is when only one solution out of the four is possible, thanks to an *a-priori* knowledge of the position of the target 20. There might be cases where, for mechanical reasons, the target 20 is not allowed to move toward the other solutions, and there is no indeterminate position. The Z value of each light source 200 can be estimated by comparing the size of the mask 102 to the size of the shadow of the mask 102 on the imager 104. Using basic geometric consideration, when Z is big, these sizes tend to be equal, and when Z is small, the shadow of the mask is bigger than the mask itself.

In another embodiment, the 6D position of the target 20 can be computed using only three light source projections and the Z estimate for each light source. From the light projection and the Z estimate, it is possible to derive the three dimensional (3D) position of each light source 200 in space. From these 3D positions, one can fit the 3D model of the target 20 to the estimated 3D positions of the light sources 200 to get the 6D position of the target 20. In this fitting process, it is possible to put more emphasis in fitting well the (x, y) projection of the light source location than in fitting well the Z value, since the latter has a lower precision.

In other embodiments, the system 1000 according to the invention comprises three light sources 200 and two shadow sensors 100 configured as a stereo shadow sensor. A stereo shadow sensor, as used herein, refers to two shadow sensors 100 whose relative position is known. In such embodiments, each sensor 100 can record a projection of the light sources 200, resulting in an $(x_1, y_1, x_2, y_2)$ estimate of the shadow positions on the first and second sensors, respectively. From this data, the Z estimate may be retrieved with good precision, provided that the distance between the two shadow sensors 100 is well controlled and large enough, e.g. having a distance of the same order of magnitude than the sensor to target distance. From this information, it is possible to re-compute the (X,Y,Z) coordinate in the world coordinate of the light source, and thus the 6D coordinate of the target 20.

Optimization of the 6D position estimate can be performed by minimizing the re-projection error between the measured $(x_1,y_1,x_2,y_2)$ versus the computed $(x_{1c},y_{1c},x_{2c},y_{2c})$ from the 6D position estimate, in a similar way as in a four light source scenario.

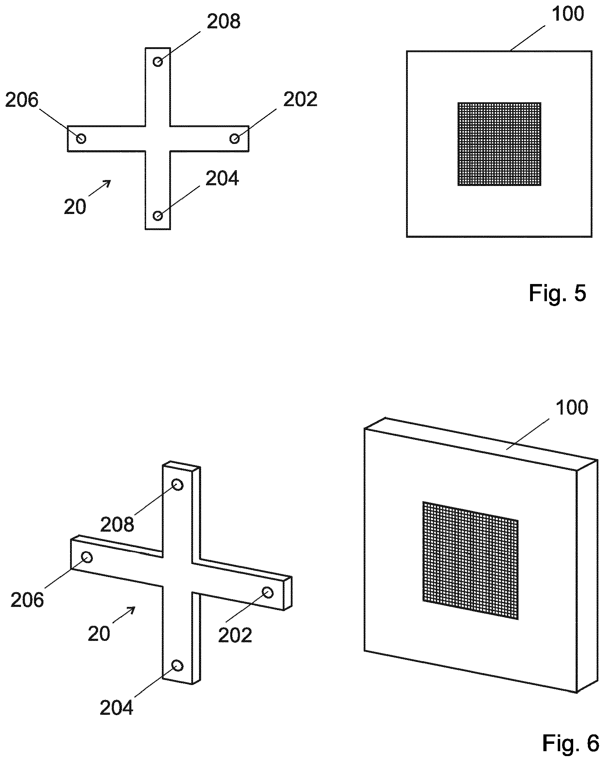

According to another embodiment, the target 20 comprises four or more light sources 200. In such embodiment, the four light sources 200 can belong to a single plane, as illustrated in Figs. 5 and 6.

Fig. 5 illustrates a target 20 comprising four coplanar light sources 202, 204, 206 and 208 and a shadow sensor 100, as each is seen from a point on the optical axis, and Fig. 6 illustrates a perspective view of the target 20 and of the shadow sensor 100 of Fig. 5.

The target 20 has a cross shape comprising four arms having the same length. The distance of each light source 202, 204, 206 and 208 from the center of the cross is substantially identical. However, it must be understood that the present invention is not limited to a target having a cross shape, nor to a target having a symmetrical shape. Moreover, the position of the light sources 202, 204, 206 and 208 on the target 20 can be arbitrary and not necessarily symmetrical with respect to the center of the target.

In a preferred embodiment, the light sources 202, 204, 206 and 208 are LEDs arranged to be pulsed to generate the shadow on the sensor 100.

One advantage of a planar configuration is the generation of a large angular span of the target without any occlusions. Another advantage is the reduced production costs. Still another advantage is that a simple linear method can be used to compute the first position estimate, for example, the linear method described above for determining the 6D position from the projection of four coplanar points.

In these configurations, the target 20 can be turned by +/- 90 degrees, along two different directions crossing the optical axis of the shadow sensor 100, and the shadow sensor 100 would still be able to record four positions.

However, more practically, the angular span may be about +/- 70 degrees due to non-uniform angular spreads of the light from the point light sources. Again, it is to be understood that other configurations, including those that are not planar, may be used are envisioned to be within the scope of the present disclosure.

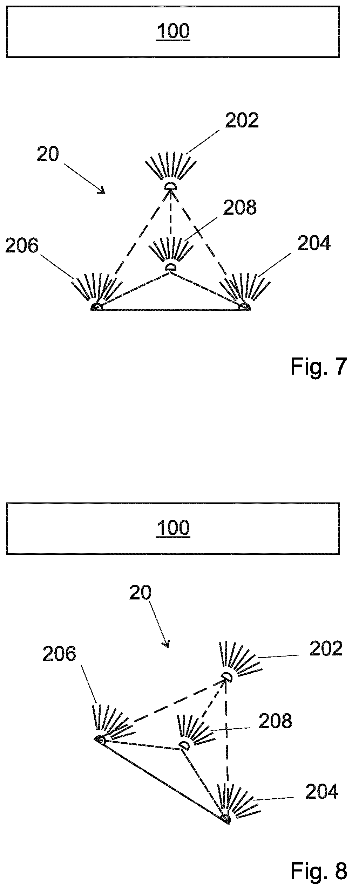

In yet another configuration, three coplanar light sources 202, 204, 206 are used in addition to one off-plane light source 208. For example, such a configuration would correspond to a regular tetrahedron, where the light sources are placed on the four corners of the tetrahedron. Such a target configuration 20 is illustrated in Fig. 7 with shadow sensor 100. In one embodiment, the out-of-plane light source 208 is set on a pillar attached to the plane of the coplanar light sources 202, 204, 206.

Such a configuration may produce better angular accuracy than the planar configuration because rotation of the shadow sensor 100 will induce a larger shadow displacement compared to using a planar target of similar size. This is for example the case when the target is oriented parallel to the shadow sensor mask: if all light sources are coplanar, the estimation of the rotation along an axis perpendicular to the optical axis (of the shadow sensor) is mathematically badly conditioned, resulting in poor accuracy.

In yet another configuration, four coplanar light sources 202, 204, 206 are used in addition to one off-plane light source 208. For example, said four coplanar light sources may be placed on a square. In this configuration, if no initial 6D position estimate is available, the four light sources can be used to apply a linear method of computing the 6D position estimate, and then the additional light sources is used in the further non-linear optimisation of the position.

However, the angular span may be limited to about +/- 35 degrees in some directions and, when two light sources are aligned with the optical axis, one of the light sources may be occluded. Fig. 8 illustrates this occlusion with a target configuration 20, where light source 204 is occluded by light source 202 as seen by shadow sensor 100.

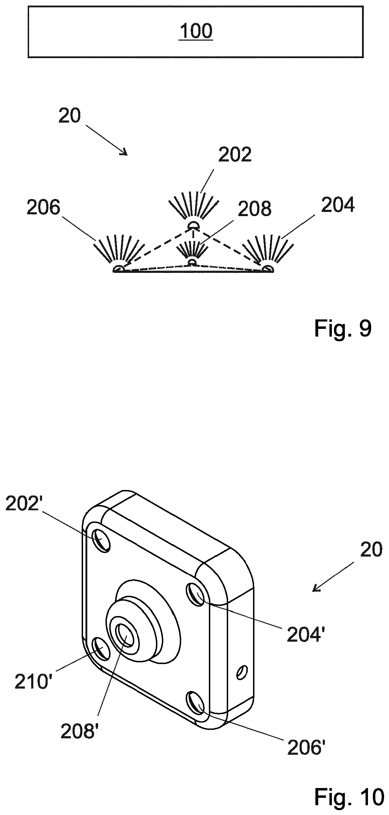

Therefore, a compromise between a regular (or high) tetrahedral light source configuration, as illustrated in Figs. 7 and 8, and a flatter target configuration, as illustrated in Fig. 9, may be used in some embodiments. In the embodiment of Fig. 9, the closer the off-planar light source 202 is to the other three coplanar light sources 204, 206, 208, the larger the angular span and the worse the angular positioning accuracy. However, having the off-planar light source 202 in a lower position (closer to the co-planar light sources 204, 206, 208), the more the target 20 and/or the sensor 100 must rotate in order to align two light sources with the optical axis resulting in an occlusion.

According to another embodiment, illustrated in Fig. 10, the target 20 comprises five or more light sources, from which at least four are located on at corresponding locations 202', 204', 206' and 201' belonging to a single plane, and at least one is located at a location 208' outside of said plane. In such embodiment, the at least four light sources can be used to compute a first estimate of the 6D position of the target 20 using a linear method. Once an estimate of the 6D position is available, this position can be optimized using said five or more light sources.

It is noted that while the above configurations of a target are described, other configurations are envisioned to be within the scope of the present disclosure.

It is also to be noted that any of the aspects, or combination of aspects, described above may be implemented via hardware or software. For example, these aspects may be implemented on a processor or a plurality of processors, within or external to the shadow sensor. These processors also may be embedded or integrated with other processors designed for a separate purpose, for example, as part of a central processing unit (CPU). A "processor" as used herein refers to any, or part of any, electrical circuit comprised of any number of electrical components, including, for example, resistors, transistors, capacitors, inductors, and the like. The circuit may be of any form, including, for example, an integrated circuit, a set of integrated circuits, a microcontroller, a microprocessor, a collection of discrete electronic components on a printed circuit board (PCB) or the like. The processor may also stand alone or be part of a computer used for operations other than processing sensed data. Implementation of these aspects may by hardware or software and may be realized in any number of electronic devices and/or applications, including but not limited to, personal computers, servers, mobile phones, and the like. Moreover, the above aspects and/or combination of aspects may be stored in memory which is executable by one of said processors. It should be noted that the above description is non-limiting, and the examples are but only a few of many possible processors and implementations envisioned.

**Reference signs used in the Figures**

| | |
|---|---|
| 1 | Recording step |
| 2 | 6D position estimate computing the step |
| 3 | Re-projecting step |
| 4 | Error computing step |
| 5 | Error checking step |
| 6 | Iteration numbers checking step |
| 7 | 6D position estimate correcting step |
| 8 | No position available step |
| 9 | 6D position estimate step |
| 100 | Shadow sensor |
| 102 | Mask |
| 104 | Imager |
| 108 | Processor of the shadow sensor |
| 200 | Light source |
| 202 | Light source |
| 204 | Light source |
| 206 | Light source |
| 208 | Light source |
| 202' | Light source location |
| 204' | Light source location |
| 206' | Light source location |
| 208' | Light source location |
| 210' | Light source location |
| 300 | Object point |
| 302 | Pin-hole camera |
| 304 | Image plane (imager) |
| 306 | Pinhole |
| 800 | External processor |
| 1000 | System |
| f | Focal length |
| t | Thickness |
| x | Bi-dimensional position |
| A | Air |
| PS | Periodic signal (ideal case, without refraction) |
| NPS | Non periodic signal (real case, with refraction) |
| R | Range of interest for position analysis |

**Claims**

1. A six degrees of freedom positioning system (1000) comprising:

   - a target (20) comprising N light sources (200);
   - at least one shadow sensor (100) comprising a mask (102) and configured to sense shadows cast on the shadow sensor by light emitted from the light sources (200) of the target (20), wherein N is equal to at least four for one shadow sensor (100) and N is equal to at least three for at least two shadow sensors with known relative position (100); and
- a processor (108, 800);
wherein the processor (108, 800) is configured to:

- recording a projection of at least four points, a projection of a point being a projection of light from a light source of the target on the shadow sensor; **characterized in that** the processor is further configured for:
- computing a first estimate of the six degrees of freedom position of the target (20) with respect to the shadow sensor (100) using known prior six degrees of freedom positions or a computation method and provided that the relative positions of the light sources (200) are known;
- virtually reprojecting from said first estimate of the six degrees of freedom position the at least four points on the shadow sensor (100) by considering the shadow sensor (100) as a calibrated pinhole camera (302, 304) so as to use projective geometry computations;
- computing an error between the recorded projections and the virtual reprojections;
- estimating the six degrees of freedom position of the target (20) with respect to the shadow sensor (100) based on said error and on said first estimate of the six degrees of freedom position of the target (20).

2. The six degrees of freedom positioning system according to claim 1, wherein the shadow sensor (100) comprises an imager (104), the mask (102) having repetitive elements and a distinctive element, and wherein as light from the N light sources (200) of the target (20) passes through the mask (102), a shadow of the mask (102) is cast on the imager (104).

3. The six degrees of freedom positioning system according to one of claims 1 to 2, wherein the shadow sensor comprises a plurality of filters for filtering light of a plurality of wavelengths, and the processor (108, 800) is configured to distinguish between the sensed light from each of the N light sources (200) based at least in part on the sensed wavelengths of light.

4. The six degrees of freedom positioning system according to one of claims 1 to 3 wherein the processor is configured to distinguish between the sensed light from each of the N light sources (200) based at least in part on temporal modulation of the N light sources (200) of the target (20).

5. The six degrees of freedom positioning system according to one of claims 1 to 4, wherein the shadow sensor further comprises a photodiode for syncing the shadow sensing with the pulsing of the N light sources (200) of the target and/or for identifying which light source (200) is emitting light.

6. The six degrees of freedom positioning system according to one of claims 1 to 4, the shadow sensor (100) being configured so as to operate as a photodiode, by taking an image and summing captured pixels to generate a single value.

7. The six degrees of freedom positioning system according to one of claims 1 to 4, comprising a radiofrequency link between each light source (200) and the shadow sensor (100) so that each light source (200) can send over said radiofrequency link an ID of the light source and sync its light emission with the recording of the shadow by the shadow sensor (100).

8. The six degrees of freedom positioning system according to one of claims 1 to 7, wherein the processor is configured to:

- sync the shadow sensing with a pulsing of the light sources (200) of the target (20);
- distinguish between the sensed shadows from each of the N light sources (200) of the target (20);
- determine two-dimensional positions corresponding to each of the light sources (200) of the target (20) based on the sensed shadows; and
- compute a six degrees of freedom position of the target (20) with respect to the shadow sensor (100) based on the determined two-dimensional positions.

9. A method performed by a processor for estimating a six degrees of freedom position of a target (20) comprising N light sources (200) with respect to at least one shadow sensor (100) comprising a mask (102) and configured to sense shadows cast on the shadow sensor by light emitted from the light sources (200) of the target (20), wherein N is equal to at least four for one shadow sensor and N is equal to at least three for at least two shadow sensors, the method comprising:

- recording a projection of at least four points, a projection of a point being a projection of light from a light source (200) of the target (20) on the shadow sensor (100);

**characterized in that** the method further comprises:

- computing a first estimate of the six degrees of freedom position of the target (20) with respect to the shadow sensor (100) using known prior six degrees of freedom positions or a computation method, provided that the relative positions of the light sources are known;
- virtually reprojecting from said first estimate of the six degrees of freedom position the at least four points on the shadow sensor (100) by considering the shadow sensor (100) as a calibrated pinhole camera (302, 304) so as to use projective geometry computations;
- computing an error between the recorded projections and the virtual reprojections, and
- estimating the six degrees of freedom position of the target (20) with respect to a shadow sensor (100) based on said error and on said first estimate of the six degrees of freedom position of the target.

10. The six degrees of freedom positioning method according to the previous claim, wherein the steps of computing an estimate, virtually reprojecting the at least four points, and computing an error are performed iteratively.

11. The six degrees of freedom positioning method according to the previous claim, comprising the step of checking if the number of iterations exceeds a threshold.

**Patentansprüche**

1. Positioniersystem (1000) mit sechs Freiheitsgraden, umfassend:

ein Ziel (20), das N Lichtquellen (200) umfasst,
mindestens einen Schattensensor (100), der eine Maske umfasst (102) umfasst und dazu gestaltet ist, Schatten abzufühlen, die durch Licht, das von den Lichtquellen (200) des Ziels (20) emittiert wird, auf den Schattensensor geworfen wird, wobei N für einen Schattensensor (100) gleich mindestens vier ist und N für mindestens zwei Schattensensoren mit bekannten relativen Positionen (100) mindestens drei ist, und
einen Prozessor (108, 800), wobei der Prozessor (108, 800) zu Folgendem gestaltet ist:

- Aufzeichnen einer Projektion von mindestens vier Punkten, wobei eine Projektion eines Punktes eine Projektion von Licht von einer Lichtquelle des Ziels auf den Schattensensor ist, **dadurch gekennzeichnet, dass** der Prozessor ferner zu Folgendem gestaltet ist:
- Berechnen einer ersten Schätzung der Position des Ziels (20) in sechs Freiheitsgraden in Bezug auf den Schattensensor (100) unter Verwendung bekannter vorheriger Positionen in sechs Freiheitsgraden oder eines Berechnungsverfahrens und unter der Maßgabe, dass die relativen Positionen der Lichtquellen (200) bekannt sind,
- virtuelles Reprojizieren der mindestens vier Punkte auf den Schattensensor (100) aus der ersten Schätzung der Position in sechs Freiheitsgraden durch Betrachten des Schattensensors (100) als eine kalibrierte Lochkamera (302, 304), um Projektionsgeometrieberechnungen verwenden zu können,
- Berechnen einer Abweichung zwischen den aufgezeichneten Projektionen und den virtuellen Reprojektionen,
- Schätzen der Position des Ziels (20) in sechs Freiheitsgraden in Bezug auf den Schattensensor (100) basierend auf der Abweichung und auf der ersten Schätzung der Position des Ziels (20) in sechs Freiheitsgraden.

2. Positioniersystem mit sechs Freiheitsgraden nach Anspruch 1, wobei der Schattensensor (100) einen Bildwandler (104) umfasst, wobei die Maske (102) sich wiederholende Elemente und ein sich unterscheidendes Element aufweist und wobei, während Licht von den N Lichtquellen (200) des Ziels (20) durch die Maske (102) dringt, ein Schatten der Maske (102) auf den Bildwandler (104) geworfen wird.

3. Positioniersystem mit sechs Freiheitsgraden nach einem der Ansprüche 1 bis 2, wobei der Schattensensor mehrere Filter zum Filtern von Licht mehrerer Wellenlängen umfasst und der Prozessor (108, 800) dazu gestaltet ist, zwischen dem abgefühlten Licht von jeder der N Lichtquellen (200) basierend zumindest teilweise auf den abgefühlten Wellenlängen des Lichts zu unterscheiden.

4. Positioniersystem mit sechs Freiheitsgraden nach einem der Ansprüche 1 bis 3, wobei der Prozessor dazu gestaltet ist, zwischen dem erfüllten Licht von jeder der N Lichtquellen (200) basierend zumindest teilweise auf einer zeitbezogenen Modulation der N Lichtquellen (200) des Ziels (20) zu unterscheiden.

5. Positioniersystem mit sechs Freiheitsgraden nach einem der Ansprüche 1 bis 4, wobei der Schattensensor ferner eine Photodiode zum Synchronisieren der Schattenabfühlung mit dem Pulsen der N Lichtquellen (200) des Ziels und/oder zum Identifizieren, welche Lichtquelle (200) Licht emittiert, umfasst.

6. Positioniersystem mit sechs Freiheitsgraden nach einem der Ansprüche 1 bis 4, wobei der Schattensensor (100) derart gestaltet ist, dass er als Photodiode arbeitet, indem er ein Bild aufnimmt und erfasste Pixel summiert, um einen einzelnen Wert zu erzeugen.

7. Positioniersystem mit sechs Freiheitsgraden nach einem der Ansprüche 1 bis 4, eine Funkfrequenzverbindung zwischen jeder Lichtquelle (200) und dem Schattensensor (100) umfassend, sodass jede Lichtquelle (200) über die Funkfrequenzverbindung eine Kennung der Lichtquelle senden kann und ihre Lichtemission mit der Aufzeichnung des Schattens durch den Schattensensor (100) synchronisieren kann.

8. Positioniersystem mit sechs Freiheitsgraden nach einem der Ansprüche 1 bis 7, wobei der Prozessor zu Folgendem gestaltet ist:

   - Synchronisieren der Schattenabfühlung mit einem Pulsen der Lichtquellen (200) des Ziels (20),
   - Unterscheiden zwischen den abgefühlten Schatten von jeder der N Lichtquellen (200) des Ziels (20),
   - Bestimmen zweidimensionaler Positionen, die jeder der Lichtquellen (200) des Ziels (20) entsprechen, basierend auf den abgefühlten Schatten und
   - Berechnen einer Position des Ziels (20) in sechs Freiheitsgraden in Bezug auf den Schattensensor (100) basierend auf den bestimmten zweidimensionalen Positionen.

9. Verfahren, das von einer Verarbeitungseinheit durchgeführt wird, zum Schätzen einer Position eines Ziels (20), das N Lichtquellen (200) umfasst, in sechs Freiheitsgraden in Bezug auf mindestens einen Schattensensor (100), der eine Maske (102) umfasst und dazu gestaltet ist, Schatten abzufühlen, die durch Licht, das von den Lichtquellen (200) des Ziels (20) emittiert wird, auf den Schattensensor geworfen wird, wobei N für einen Schattensensor gleich mindestens vier ist und N für mindestens zwei Schattensensoren mindestens drei ist, wobei das Verfahren Folgendes umfasst:

   - Aufzeichnen einer Projektion von mindestens vier Punkten, wobei eine Projektion eines Punktes eine Projektion von Licht von einer Lichtquelle (200) des Ziels (20) auf den Schattensensor (100) ist,

   **dadurch gekennzeichnet, dass** das Verfahren ferner Folgendes umfasst:

   - Berechnen einer ersten Schätzung der Position des Ziels (20) in sechs Freiheitsgraden in Bezug auf den Schattensensor (100) unter Verwendung bekannter vorheriger Positionen in sechs Freiheitsgraden oder eines Berechnungsverfahrens und unter der Maßgabe, dass die relativen Positionen der Lichtquellen bekannt sind,
   - virtuelles Reprojizieren der mindestens vier Punkte auf den Schattensensor (100) aus der ersten Schätzung der Position in sechs Freiheitsgraden durch Betrachten des Schattensensors (100) als eine kalibrierte Lochkamera (302, 304), um Projektionsgeometrieberechnungen zu verwenden,
   - Berechnen einer Abweichung zwischen den aufgezeichneten Projektionen und den virtuellen Reprojektionen, und
   - Schätzen der Position des Ziels (20) in sechs Freiheitsgraden in Bezug auf einen Schattensensor (100) basierend auf der Abweichung und auf der ersten Schätzung der Position des Ziels in sechs Freiheitsgraden.

10. Positionierverfahren mit sechs Freiheitsgraden nach dem vorhergehenden Anspruch, wobei die Schritte des Berechnens einer Schätzung, des virtuellen Reprojizierens der mindestens vier Punkte und des Berechnens einer Abweichung iterativ durchgeführt werden.

**11.** Positionierverfahren mit sechs Freiheitsgraden nach dem vorhergehenden Anspruch, den Schritt des Prüfens, ob die Anzahl der Iterationen einen Schwellenwert überschreitet, umfassend.

**Revendications**

**1.** Un système de positionnement à six degrés de liberté (1000) comprenant :

- une cible (20) comprenant N sources de lumière (200) ;
- au moins un capteur d'ombre (100) comprenant un masque (102) et configuré pour détecter des ombres projetées sur le capteur d'ombre par la lumière émise par les sources de lumière (200) de la cible (20), dans lequel N est égal à au moins quatre pour un capteur d'ombre (100) et N est égal à au moins trois pour au moins deux capteurs d'ombre (100) avec une position relative connue; et
- un processeur (108, 800) ;
dans lequel le processeur (108, 800) est configuré pour

- enregistrer une projection d'au moins quatre points, une projection d'un point étant une projection de lumière provenant d'une source de lumière de la cible sur le capteur d'ombre ; **caractérisé en ce que** le processeur est en outre configuré pour
- calculer une première estimation de la position à six degrés de liberté de la cible (20) par rapport au capteur d'ombre (100) en utilisant des positions à six degrés de liberté connues ou une méthode de calcul et à condition que les positions relatives des sources de lumière (200) soient connues;
- reproduire virtuellement à partir de ladite première estimation de la position à six degrés de liberté les au moins quatre points sur le capteur d'ombre (100) en considérant le capteur d'ombre (100) comme une caméra sténopé calibrée (302, 304) de manière à utiliser des calculs de géométrie projective ;
- calculer une erreur entre les projections enregistrées et les reprojections virtuelles ;
- estimer la position à six degrés de liberté de la cible (20) par rapport au capteur d'ombre (100) sur la base de ladite erreur et de ladite première estimation de la position à six degrés de liberté de la cible (20).

**2.** Système de positionnement à six degrés de liberté selon la revendication 1, dans lequel le capteur d'ombre (100) comprend un imageur (104), le masque (102) ayant des éléments répétitifs et un élément distinctif, et dans lequel, lorsque la lumière provenant des N sources de lumière (200) de la cible (20) passe à travers le masque (102), une ombre du masque (102) est projetée sur l'imageur (104).

**3.** Système de positionnement à six degrés de liberté selon l'une des revendications 1 à 2, dans lequel le capteur d'ombre comprend une pluralité de filtres pour filtrer la lumière d'une pluralité de longueurs d'onde, et le processeur (108, 800) est configuré pour distinguer la lumière détectée de chacune des N sources de lumière (200) en se basant au moins en partie sur les longueurs d'onde de lumière détectées.

**4.** Système de positionnement à six degrés de liberté selon l'une des revendications 1 à 3, dans lequel le processeur est configuré pour distinguer la lumière détectée de chacune des N sources de lumière (200) en se basant au moins en partie sur la modulation temporelle des N sources de lumière (200) de la cible (20).

**5.** Système de positionnement à six degrés de liberté selon l'une des revendications 1 à 4, dans lequel le capteur d'ombre comprend en outre une photodiode pour synchroniser la détection d'ombre avec la pulsation des N sources de lumière (200) de la cible et/ou pour identifier quelle source de lumière (200) émet de la lumière.

**6.** Système de positionnement à six degrés de liberté selon l'une des revendications 1 à 4, le capteur d'ombre (100) étant configuré de manière à fonctionner comme une photodiode, en prenant une image et en additionnant les pixels capturés pour générer une valeur unique.

**7.** Système de positionnement à six degrés de liberté selon l'une des revendications 1 à 4, comprenant une liaison radiofréquence entre chaque source de lumière (200) et le capteur d'ombre (100) de sorte que chaque source de lumière (200) puisse envoyer sur ladite liaison radiofréquence une identification de la source de lumière et synchroniser son émission de lumière avec l'enregistrement de l'ombre par le capteur d'ombre (100).

**8.** Système de positionnement à six degrés de liberté selon l'une des revendications 1 à 7, dans lequel le processeur est configuré pour :

- synchroniser la détection de l'ombre avec une pulsation des sources de lumière (200) de la cible (20) ;
- distinguer les ombres détectées de chacune des N sources de lumière (200) de la cible (20) ;
- déterminer les positions bidimensionnelles correspondant à chacune des sources de lumière (200) de la cible (20) sur la base des ombres détectées ; et
- calculer une position à six degrés de liberté de la cible (20) par rapport au capteur d'ombre (100) sur la base des positions bidimensionnelles déterminées.

9. Un procédé exécuté par une unité de traitement pour estimer une position à six degrés de liberté d'une cible (20) comprenant N sources de lumière (200) par rapport à au moins un capteur d'ombre (100) comprenant un masque (102) et configuré pour détecter des ombres projetées sur le capteur d'ombre par la lumière émise par les sources de lumière (200) de la cible (20), dans lequel N est égal à au moins quatre pour un capteur d'ombre et N est égal à au moins trois pour au moins deux capteurs d'ombre, le procédé comprenant :

- enregistrer une projection d'au moins quatre points, une projection d'un point étant une projection de lumière provenant d'une source de lumière (200) de la cible (20) sur le capteur d'ombre (100) ; **caractérisé en ce que** le procédé comprend en outre
- calculer une première estimation de la position à six degrés de liberté de la cible (20) par rapport au capteur d'ombre (100) en utilisant les six degrés de liberté antérieurs connus ou une méthode de calcul, à condition que les positions relatives des sources de lumière soient connues;
- reprojeter virtuellement à partir de ladite première estimation de la position à six degrés de liberté les au moins quatre points sur le capteur d'ombre (100) en considérant le capteur d'ombre (100) comme une caméra sténopé calibrée (302, 304) de manière à utiliser des calculs de géométrie projective ;
- calculer une erreur entre les projections enregistrées et les reprojections virtuelles, et
- estimer la position à six degrés de liberté de la cible (20) par rapport à un capteur d'ombre (100) sur la base de ladite erreur et de ladite première estimation de la position à six degrés de liberté de la cible.

10. La méthode de positionnement à six degrés de liberté selon la revendication précédente, dans laquelle les étapes de calcul d'une estimation, de reprojection virtuelle des au moins quatre points, et de calcul d'une erreur sont effectuées de manière itérative.

11. La méthode de positionnement à six degrés de liberté selon la revendication précédente, comprenant l'étape de vérification si le nombre d'itérations dépasse un seuil.

Fig. 1

Fig. 2

304　　　　302

300

306

x

Fig. 3A

100

200

x

104

102

f

Fig. 3B

Fig. 4

Fig. 5

Fig. 6

100

202

20

208

206

204

Fig. 7

100

20

206

202

208

204

Fig. 8

100

20

202

206    208    204

Fig. 9

202'

20

204'

210'

208'

206'

Fig. 10

Fig.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6417836 B
- WO 2012007561 A
- US 8368647 B
- US 20130106833 A
- US 7768498 B
- US 6978167 B
- US 7876942 B
- US 2004188616 A

**Non-patent literature cited in the description**

- **R. HARTLEY ; A. ZISSERMAN.** Multiple view geometry in computer vision. Cambridge University Press
- **HARALICK et al.** Review and Analysis of Solutions of the Three Point Perspective Pose Estimation Problem. *International Journal of Computer Vision,* 1994, vol. 13 (3), 331-56